# EUROPEAN PATENT SPECIFICATION

(11) **EP 2 106 957 B1**
(45) Date of publication and mention of the grant of the patent: **16.05.2012**
(21) Application number: 09003298.8
(22) Date of filing: 06.03.2009
(51) Int. Cl.: B60N 2/00, B60N 2/02, B60N 2/16, B60N 2/18

(54) **Seat device of a vehicle, method of controlling the seat device and computer program product therefor**
Sitzvorrichtung eines Fahrzeugs, Verfahren zum Kontrollieren der Sitzvorrichtung und Computerprogrammprodukt dafür
Dispositif de siège d'un véhicule, procédé de contrôle du dispositif de siège et produit de programme informatique associé

(30) Priority: 31.03.2008 JP 2008091448
(43) Date of publication of application: 07.10.2009
(73) Proprietor: Mazda Motor Corporation, Aki-gun Hiroshima 730-8670 (JP)
(72) Inventor: Hoshino, Yoko, Aki-gun Hiroshima 730-8670 (JP); Uemura, Hiroki, Aki-gun Hiroshima 730-8670 (JP); Okamoto, Yoshihisa, Aki-gun Hiroshima 730-8670 (JP); Niibe, Tadayuki, Aki-gun Hiroshima 730-8670 (JP); Takeda, Yusaku, Aki-gun Hiroshima 730-8670 (JP)
(74) Representative: Müller-Boré & Partner Patentanwälte

(56) References cited:
- JP-A- 2007 185 988
- US-A- 4 807 715

## Description

The present invention relates to a seat device which is applicable to a vehicle, such as an automotive vehicle, and in particular, relates to a seat device for a vehicle which can improve the egress of a passenger seated in a seat, a method of controlling the seat device and a computer program product therefor.

A passenger seated in a seat of the vehicle generally tries to egress, paying attention to a vehicle roof or an upper edge of a door opening so as not to hit a passenger's head against them, and also paying attention to a tire house so as to avoid improper interference of a passenger's hip with it in case the passenger is seated in a rear seat. Thus, the passenger may be burdened with these paying attentions.

Accordingly, various seat devices for a vehicle have been proposed for the purpose of providing a smooth egress of the passenger by improving the egress of the passenger. Japanese Patent Laid-Open Publication No. 2007-185988 A, for example, which the features of the preamble of claim 1 are known from, discloses a seat device in which a reclining angle of a seat back relative to a seat cushion is adjusted to an appropriate angle for the egress of the passenger when the passenger's egress is determined based on some information, such as an unlock of a door lock, an opening of the door, or a buckle release of a seatbelt device.

Herein, the vehicle-egress move of the passenger is comprised of various specific actions of body's parts. Therefore, only the adjustment of the reclining angle of the seat back may not be enough to reduce the above-described burden to the passenger effectively.

An object of the present invention is to provide a seat device for a vehicle which can effectively reduce the burden to the passenger when the passenger egresses from the vehicle.

The object is solved by the seat device for a vehicle, method and computer program product according to the present invention of the independent claims. Preferred embodiments of the present invention are subject of the dependent claims.

According to a first aspect of the present invention, which is defined by the technical features set forth in claim 1, there is provided a seat device for a vehicle, comprising an egress-start determining device to determine a start of egress of a passenger seated in a seat of the vehicle, a completion determining device to determine completion of a driver's head moving out of a door opening of the vehicle after the start of egress of the passenger, and a seat-sitting-face position adjusting device to adjust a position, i.e. a height/orientation and/or tilt of a sitting face of the seat and/or an orientation/tilt of a seat back, in such a manner that the position is adjusted to a first position during a time from the start of egress of the passenger to the completion of the driver's head moving out of the door opening of the vehicle, and/or the position is adjusted to a second position after the completion of the driver's head moving out of the door opening of the vehicle.

According to the present invention, since the position of the seat sitting face and/or the seat back is properly adjusted respectively before and after the driver's head moves out of the door opening during the egress move of the passenger in accordance with a change of the burden to an upper half of a passenger's body and a lower half of the passenger, the above-described burden to the passenger at the passenger's egress can be reduced effectively.

According to an embodiment of the present invention, the seat device for a vehicle further comprises a body-size detecting device to detect a body size of the passenger, wherein the first position is set based on a length of an upper half of a passenger's body which influence a burned to the upper half of a passenger's body and the second position is set based on a length of a lower half of the passenger's body which influences the upper half of the passenger's body. Thereby, the first and second positions are set respectively based on the length of the upper half and the lower half of the passenger's body which influence the burdens to the passenger at the passenger's egress. Accordingly, before the passenger's head moving out of the vehicle, the burden to upper half of the passenger's body can be reduced properly, ensuring an enough head clearance. Then, after the passenger's head moving out of the vehicle, the muscle of the lower half of the passenger's body is assisted in taking a standing position, so that the muscle burden to lower half of the passenger's body can be reduced properly.

According to another embodiment of the present invention, the seat device for a vehicle further comprises a door-opening angle detecting device to detect an opening angle of a door, wherein at least one of the first position and second position is corrected by the opening angle of the door which is detected by the door-opening angle detecting device. Thereby, the reduction of the burden to the passenger can be conducted properly considering that the gravity center of the passenger's body at the passenger's egress changes in accordance with the opening angle of the door.

According to another embodiment of the present invention, the vehicle is a type of vehicle in which an upper edge of a door opening of a rear side door becomes shorter gradually along a rearward direction of the vehicle, the seat-sitting-face position adjusting device is applied to a rear seat which is provided beside the rear side door, and at least one of the first position and second position is corrected in accordance with or by the opening angle of the rear side door which is detected by the door-opening angle detecting device in such a manner that the position corrected becomes lower when the opening angle of the rear side door is relatively small. Thereby, even in case the opening angle of the rear side door is so small that the gravity center of the passenger's body moves rearward and the passenger needs to egress through an area in which the upper edge of the door opening becomes relatively low, the position or height of the sitting face of the rear seat is lowered correctively, so that the passenger's head can be properly passed below the upper edge of the door opening with little burden to the passenger.

According to another embodiment of the present invention, the seat is a rear seat of the vehicle, and the second position or height is greater than a tire house which is provided substantially beside and/or behind the rear seat. Thereby, the burden to the passenger at the passenger's egress can be reduced effectively, avoiding improper interference of the passenger's hip with the tire house.

According to another embodiment of the present invention, the completion determining device comprises an image picking-up device which is preferably provided at a door mirror of the vehicle. Further, the body-size detecting device may comprise an image picking-up device which is preferably provided at a door mirror of the vehicle. Thereby, the position of the passenger's head or the body size of the passenger can be detected by the image picking-up device easily and precisely.

According to another embodiment of the present invention, the above-described second position or height is greater than the above-described first position or height. Thereby, the burden to the passenger at the passenger's egress can be properly reduced effectively.

According to a further aspect of the present invention, which is defined by the technical features and method steps set foxth in claim 10 there is provided a method of controlling a seat device for a vehicle, comprising the steps of:
determining a start of egress of a passenger seated in a seat of the vehicle by means of an egress-start determining device;
determining completion of a driver's head moving out of a door opening of the vehicle after the start of egress of the passenger by means of a completion determining device; and
adjusting a height of a sitting face of the seat by means of a seat-sitting-face position adjusting device in such a manner that the height is adjusted to a first height during a time from the start of egress of the passenger to the completion of the driver's head moving out of the door opening of the vehicle, and/or the height is adjusted to a second height after the completion of the driver's head moving out of the door opening of the vehicle.

Preferably, the method further comprises the steps of:
detecting a body size of the passenger by means of a body-size detecting device,
setting said first height based on a length of an upper half of a passenger's body which influences a burden to the upper half of the passenger's body, and
setting said second height based on a length of a lower half of the passenger's body which influences a burden to the lower half of the passenger's body.

Further preferably, the method further comprises the steps of:
detecting an opening angle of a door by means of a door-opening angle detecting device, and
correcting at least one of said first height and second height in correspondence with the opening angle of the door.

According to a further preferred embodiment, the seat is a rear seat of the vehicle which is provided beside a rear side door, and at least one of said first height and second height is corrected by the opening angle of the rear side door which is detected by the door-opening angle detecting device in such a manner that the height corrected becomes lower when the opening angle of the rear side door is relatively small.

Further preferably, the seat is a rear seat of the vehicle, and said second height is set to be higher than a tire house which is provided substantially beside and/or behind the rear seat.

Further preferably, said second height is set to be higher than said first height.

According to a further aspect, there is provided a computer program product comprising computer-implemented instructions which, when loaded and executed on a suitable system, can perform the steps of a method, as described above, wherein the computer program product is particularly embodied as a computer-readable storage medium, as a signal and/or as a data stream.

Other features, aspects, and advantages of the present invention will become apparent from the following description which refers to the accompanying drawings.
FIG. **1** is a schematic side view of an inside of a vehicle compartment of an automotive vehicle which is equipped with a seat device according to an embodiment of the present invention.
FIG. **2** is an explanatory diagram showing an example of a seat-sitting-face position adjusting device which is provided at the seat device.
FIG. **3** is a block diagram schematically showing constitution of a seat control unit of the seat device.
FIG. **4** is a flowchart explaining an operation control of a seat at a passenger's egress.
FIG. **5A** is an elevation view schematically showing position relationships between a seat and surrounding portions of a vehicle, and FIG. **5B** is a side view schematically showing the position relationships.
FIG. **6** is an explanatory diagram showing lengths of upper and lower halves of a body of a passenger seated in the seat.
FIGS. **7A** through **7D** are explanatory diagrams schematically showing a sequence of an egress move of the passenger seated in the seat.

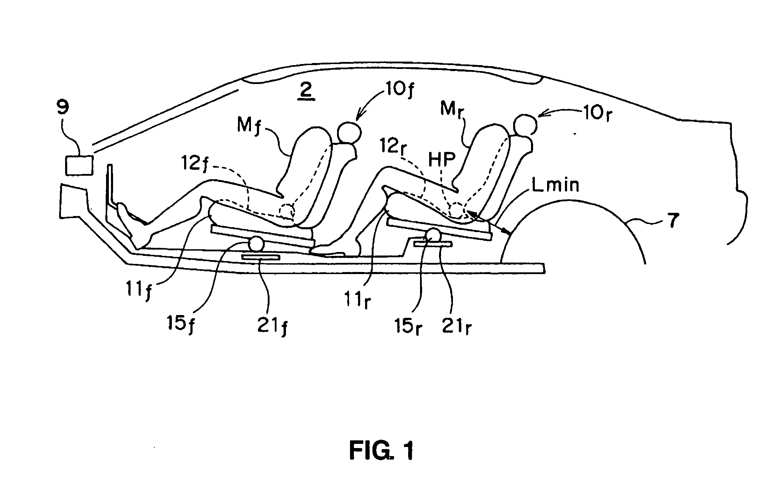

Hereinafter, a preferred embodiment of the present invention will be described referring to the accompanying drawings. FIG. 1 is a schematic side view of an inside of a vehicle compartment of an automotive vehicle which is equipped with a seat device according to the present embodiment. As shown in the figure, two rows of seats 10f, 10r are provided inside a vehicle compartment **2** of the automotive vehicle, and seat-sitting-face position adjusting devices **15f, 15r** to adjust position, such as heights, orientations and/or inclinations of seat sitting faces **12f, 12r** (sitting faces of seat cushions **11f, 11r**) and orientations and/or inclinations/tilts of seat backs, and seat vertical-position sensors **21f, 21r** to detect the heights (vertical positions) of seat sitting faces **12f, 12r** are provided at a bottom face of the seat cushions **11f, 11r** of the seats **10f, 10r.** Further, various (not shown) sensors to detect an inclination of the seat cushions 11f, 11 r and/or seat backs may be provided.

The present automotive vehicle is a type of vehicle in which an upper edge of a door opening becomes shorter gradually along a rearward direction of the vehicle. Accordingly, in case an opening angle of the door is small, the gravity center of a body of a passenger **Mr** seated in the rear seat **10r** may move rearward and therefore need to egress through an area in which the upper edge of the door opening becomes relatively low. A tire house **7** for a rear wheel is located substantially behind the rear seat **10r** on a side portion of the vehicle.

A camera device **9** as an image picking-up device is installed to a door mirror of the automotive vehicle. The camera device **9,** which is a so-called CCD camera, picks up a rear image and can detect body sizes and head positions of respective passengers **Mf, Mr** when the passengers egress easily and precisely based on data of the image picked up. An opening angle of the door can be detected based on the image data by the camera device 9 as well. Herein, the body size information of the passengers **Mf, Mr** may be alternatively obtained from IC cards which store such information, which the passengers **Mf, Mr** have. The IC cards may be inserted into a card reader to get the information stored therein.

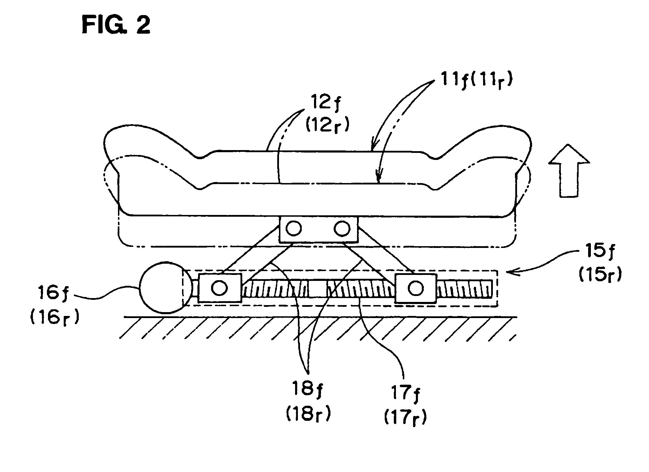

Any conventional device may be applied as the above-described seat-sitting-face position adjusting devices **15f, 15r.** Such a device, for example, as shown in FIG. **2****,** comprises a screw rod **17f** (**17r**) which is rotated by a motor with reduction mechanism **16f** (**16r**) and a pair of links **18f** (**18r**) which interconnects the screw rod **17f** (**17r**) and a bottom of the seat cushion **11f** (**11r**). The links **18f** (**18r**) move so as to swing in accordance with the rotation of the screw rod **17f** (**17r**), so that the seat cushion **11f** (**11r**) moves vertically. Herein, the seat-sitting-face position adjusting devices **15f, 15r** or the seat vertical-position sensors **21f, 21r** which are respectively provided for the front seat and the rear seat have the same structure.

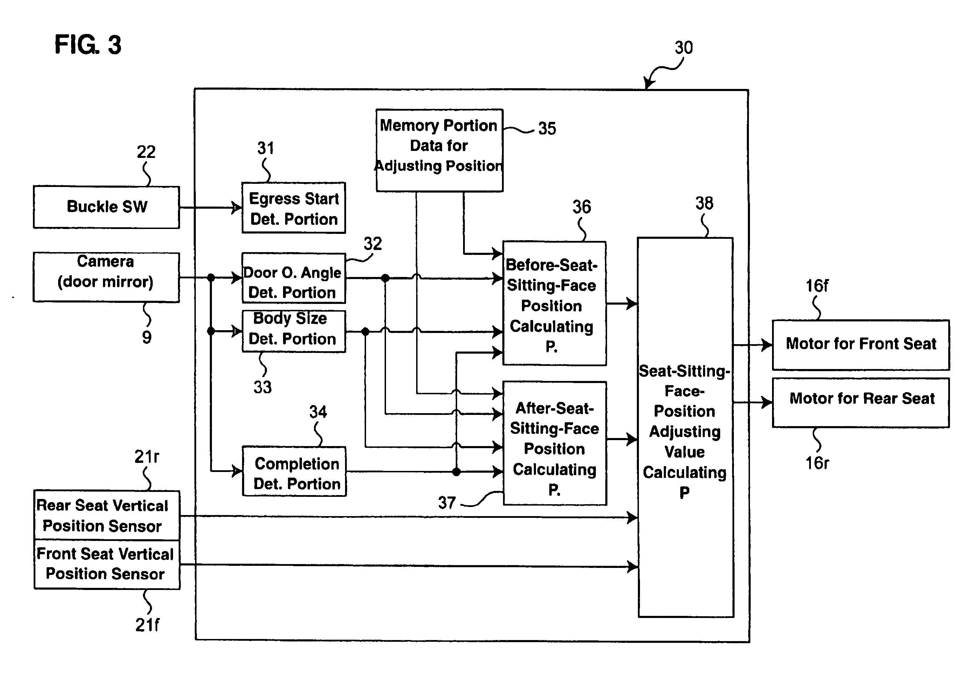

The above-described motors **16f, 16r,** seat vertical-position sensors **21f, 21r,** and camera device **9** are operationally coupled to a seat control unit **30** shown in FIG. **3****.** Further, there is provided a buckle switch **22** to detect a lock/unlock state of a buckle of a seatbelt (not illustrated) as part of an egress-start determining device to determine a start of egress of the passenger **Mf** (**Mr**). The start of egress of the passenger **Mf** (**Mr**) can be determined by detecting that the buckle has been unlocked from its lock state. The buckle SW **22** is operationally coupled to the seat control unit **30.**

The seat control unit **30** controls the front seat **10f** and the rear seat **10r** respectively, which preferably comprises a micro computer. Herein, the seat control unit **30** may be comprised as a standalone computer or may be incorporated into another control device or a vehicle-total control unit.

The seat control unit **30** comprises an egress-start determining portion 31 to which the detecting signal of the buckle SW **22** is inputted, and a door-opening angle determining portion **32,** a body-size determining portion **33** and a completion determining portion **34** to which the picked-up image data from the camera device **9** is inputted. The egress-start determining portion **31** determines based on the input signal from the buckle SW **22** whether the passengers **Mf, Mr** remain seated or start their egress moves of the vehicle. The door-opening angle determining portion **32** determines the opening angle of the door (full open, closed, half open, narrower or wider open than the half open) based on the picked-up image data from the camera device **9.**

The body-size determining portion **33** determines the body size of the passengers **Mf, Mr** based on the picked-up image data from the camera device **9.** The completion determining portion **34** determines whether the driver's head has moved out of the door opening of the vehicle or not (namely, whether the driver's head moving out of the door opening is completed or not) after the passengers **Mf, Mr** started the egress move of the vehicle.

The seat control unit **30** preferably further comprises a memory portion **35** which stores data for adjusting the position, such as height/orientation and/or inclination/tilt of the sitting face and/or the seat back which will be described. Herein, the memory portion **35** is not necessarily provided in the seat control unit **30,** but may be provided as an outer memory which is disposed outside the unit **30** so as to read the data from outside.

Further, the seat control unit **30** preferably comprises a before-seat-sitting-face position calculating portion **36** to calculate a preferable position, i.e. height, orientation and tilt of the sitting face and/or the seat back of the seat during a time from the start of the passenger's egress move to the completion of the driver's head moving out of the door opening of the vehicle. This calculation is executed, in case the start of the egress-move of the passengers **Mf, Mr** has been determined, based on determination results of the above-described portions **32** and **33** and with application of the data for adjusting the height of the sitting face stated in the above-described memory portion **35.** Further, the seat control unit **30** preferably comprises an after-seat-sitting-face position calculating portion **37** to calculate a preferable position of the seat after the completion of the driver's head moving out of the door opening of the vehicle. The calculation of the after-seat-sitting-face position calculating portion **37** is executed, in case the completion of the driver's head moving out of the door opening has been determined by the completion determining portion **34,** based on determination results of the above-described portions **32** and **33** and with application of the data for adjusting the height of the sitting face stated in the above-described memory portion **35.**

The seat control unit **30** preferably comprises a seat-sitting-face- position adjusting value calculating portion **38** to calculate an adjusting value of the height of the sitting face of the seat based on the input signals from the seat vertical-position sensors **21f, 21r** and the input signals from the above-described calculating portions **36, 37.** The calculated adjusting value by the portion **38** is outputted as control signals to the above-described motors **16f, 16r** of the seat-sitting-face position adjusting devices **15f, 15r,** so that the height of the sitting face of the seat can be adjusted.

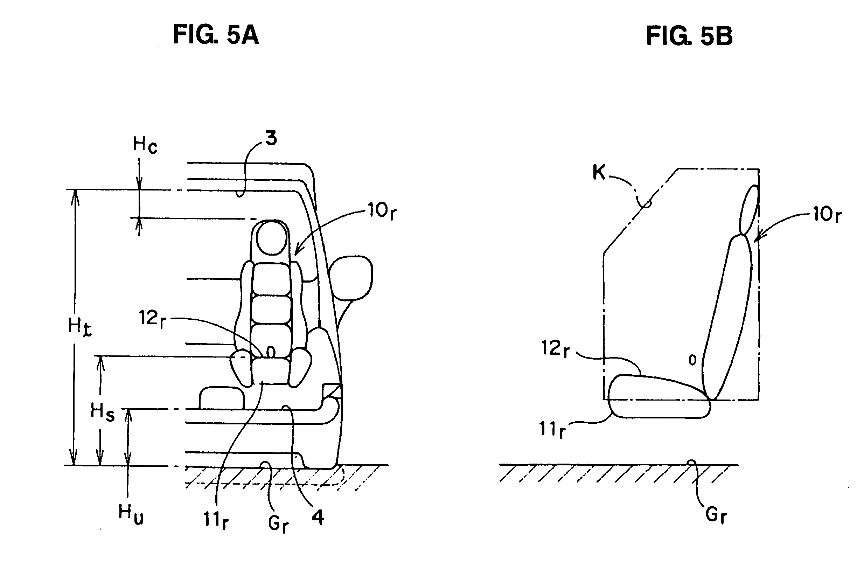

Next, the data for adjusting the height of the sitting face stated in the memory portion **35** of the seat control unit **30** and processing of the calculations of the calculating portions **36, 37** will be described as an example applied to the rear seat **10r,** for example. FIGS. **5A** and **5B** are an elevation view and a side view schematically showing position relationships between the rear seat **10r** and its surrounding portions of the vehicle. A height **Ht** from a grand face **Gr** to a ceiling face **3** of the vehicle compartment, and a height **Hu** from the ground face **Gr** to a floor face **4** of the vehicle compartment are shown. Further, a head clearance from the passenger's head to the ceiling face **3** is denoted by reference character **Hc,** and the height of the sitting face **12r** of the seat from the ground face **3** is denoted by reference character **Hs.** Reference character **K** denotes the door opening.

When the passenger **Mr** seated in the seat **10r** egresses from the vehicle, the passenger's position with a stoop may need to be taken in order to ensure an enough head clearance before the passenger's head moving out of the door opening **K** of the vehicle. Therefore, the burden to upper half of the passenger's body may be increased. Accordingly, it is preferable that the height **Hs** of the sitting face be lower at this moment. Meanwhile, after the passenger's head has moved out of the door opening **K** of the vehicle, the muscle burden to lower half of the passenger's body would become too large if the height **Hs** of the sitting face of the seat remained lower. Accordingly, it is preferable that the height **Hs** of the sitting face be higher at this moment.

According to the present embodiment, in order to improve the vehicle egress of the passenger **Mr** seated in the seat **10r,** it is detected whether the driver's head has moved out of the door opening of the vehicle after the start of the egress move of the passenger **Mr,** and the seat-sitting face **12r** is adjusted so as to become relatively low until the completion of the driver's head moving out of the door opening of the vehicle, so that the burden to the upper half of the passenger's body for taking the position with the stoop to ensure the enough head clearance can be reduced. Meanwhile, the seat-sitting face **12r** is adjusted so as to become relatively high after the completion of the driver's head moving out of the door opening of the vehicle, so that the muscle burden can be reduced.

The above-described memory portion **35** of the seat control unit **30** stores the height Ht of the ceiling face **3** of the vehicle compartment from the ground face **Gr** as data for adjusting the sitting-face height and the height **Hu** of the floor face **4** of the vehicle compartment from the ground face **Gr** as data of the kind of vehicles. Further, the head clearance **Hc** from the passenger's head to the ceiling face **3** of the vehicle compartment is preferably stored as a fixed value (50mm, for example).

The memory portion **35** stores a minimum height **Hmin** of the seat-sitting face which can avoid the interference with the tire house **7** as both data for adjusting the sitting-face height and data of the kind of vehicles. The minimum height **Hmin** of the seat-sitting face **12r** is the one to ensure a necessary minimum distance Lmin (see FIG. 1) between a hip point **HP** of the rear seat **10r** and the tire house **7** which can avoid the improper interference of the passenger's hip with the tire house 7 at the vehicle egress move of the passenger.

Further, the memory portion **35** preferably stores a corrective value in accordance with the door opening as data for adjusting sitting-face height. Herein, the correction is not necessary when the door is full open. However, since the egress move of the passenger when the door is in a middle-open state (slightly narrower than the half open, for example) may not be so easy compared to that when the door is full open, the correction of the height of the sitting face of the seat by reducing a specified value (50mm, for example), which is obtained by the calculation, is conducted. The memory portion **35** further stores coefficients (ratios relative to the passenger's height) which calculate the length of the upper half of the passenger's body which may influence the burden to the upper half of the body and the length of the lower half of the passenger's body which may influence the burden to the lower half of the body, which will described below.

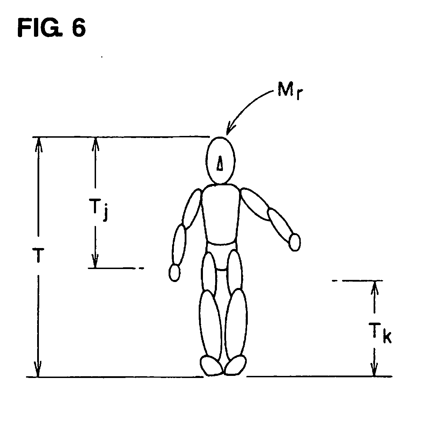

Next, processing of the before-seat-sitting-face position calculating portion **36** will be described. In case the passenger **Mr** with the height **T** (a value predicted based on the image picked up by the camera **9**) shown in FIG. **6** starts the egress move and takes the position with the stoop to ensure the enough head clearance, a length **Tj** of the upper half of the passenger's body within a range which may take the position with the stoop without difficulty, that is, a length **Tj** of the upper half of the body which influences the burden to the upper half of the passenger's body is calculated using the coefficient (60%, for example) stored in the memory portion **35** (**T** x 60%). Herein, the above-described range taking the position with the stoop without difficulty is the one in which a value which is obtained by multiplication of a torque applied to a joint of the neck and a torque applied to a joint of the waist on a locus of the driver's head moving out of the door opening through a simulation becomes the minimum.

Then, a head clearance **Hc** (fixed value: 50mm, for example) of the passenger's head to the ceiling face **3** of the vehicle compartment is added to the above-described length **Tj** of the upper half of the body which influences the burden to the upper half of the passenger's body, and this obtained value with addition is used to calculate the height **Hs** of the seat's sitting face. Further, this calculated height **Hs** is reduced by the corrective value corresponding to the angle of the door opening, so that the preferable height **H1** of the seat's sitting face for the egress move of the passenger before the driver's head moving out of the door opening is obtained finally.

Processing of the after-seat-sitting-face position calculating portion **37** will be described as follows. At first, the length of the lower half of the passenger's body is obtained from the height data **T** of the passenger by the calculation of T x 50%, and then a length **Tk** of the lower half of the passenger's body within a range which may provide a easy egress move of the passenger after the driver's head moving out of the door opening, that is, a length **Tk** of the lower half of the body which influences the burden to the lower half of the passenger's body is calculated using the coefficient (65-85%, for example) stored in the memory portion **35.** Herein, a greater value may be appropriate at the passenger egresses from the vehicle, so a value of 85%, for example, may be used for the calculation. Herein, the above-described range providing the easy egress move of the passenger after the driver's head moving out of the door opening is the one in which a value which is obtained by multiplication of a torque applied to a joint of the ankle, a torque applied to a joint of the knee, and a torque applied to a joint of the crotch on a locus of the driver's move after the driver's head moving out of the door opening through a simulation becomes the minimum.

The height **Hs** of the seat's sitting face which ensures this calculated length **Tk** of the lower half of the body which influences the burden to the lower half of the passenger's body is calculated, and this calculated height **Hs** is reduced by the corrective value corresponding to the angle of the door opening, so that the preferable height **H1** of the seat's sitting face for the egress move of the passenger after the driver's head moving out of the door opening is obtained finally.

Thus, by correcting the heights **H1, H2** of sitting face of the seat in accordance with the opening angle of the door, the burden to the passenger can be reduced considering that the gravity center of the passenger's body at the passenger's egress changes in accordance with the opening angle of the door.

Particularly, while the vehicle according to the present embodiment is a type of vehicle in which the upper edge of the door opening of the door becomes shorter gradually along the rearward direction of the vehicle, at least one of the heights **H1, H2** of sitting face of the rear seat **10r** is corrected in such a manner that the height corrected becomes lower when the opening angle of the rear door is relatively small. Thereby, even in case the opening angle of the rear side door is so small that the gravity center of the passenger's body moves rearward and the passenger need to egress through an area in which the upper edge of the door opening becomes relatively low, the height **Hs** of the sitting face of the seat is lowered correctively, so that the passenger's head can be properly passed below the upper edge of the door opening with little burden to the passenger.

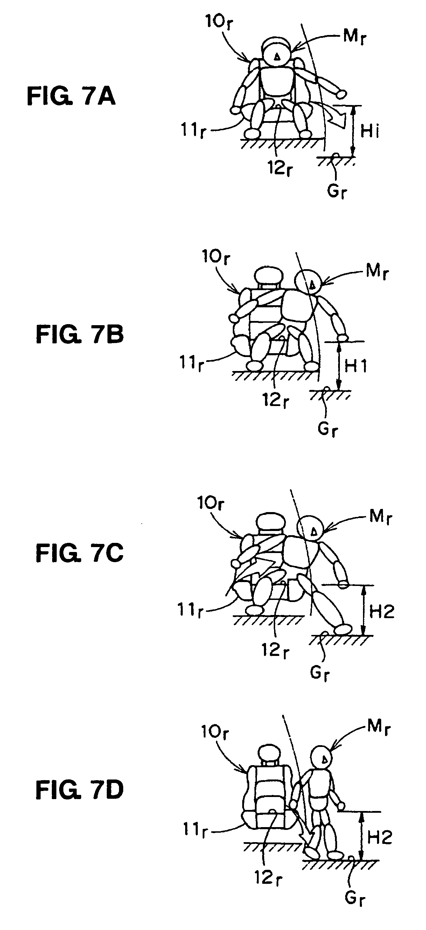

FIGS. **7A** through **7D** are explanatory diagrams schematically showing a sequence of an egress move of the passenger Mr seated in the rear seat **10r.** The rear seat **10r** which has the original height **Hi** shown in FIG. **7A** is adjusted to the height **H1** until the completion of the passenger's head moving out of the door opening (see FIGS. **7B** and **7C**). Then, after the completion of the passenger's head moving out, it is adjusted to the height **H2** (see FIG. **7D**).

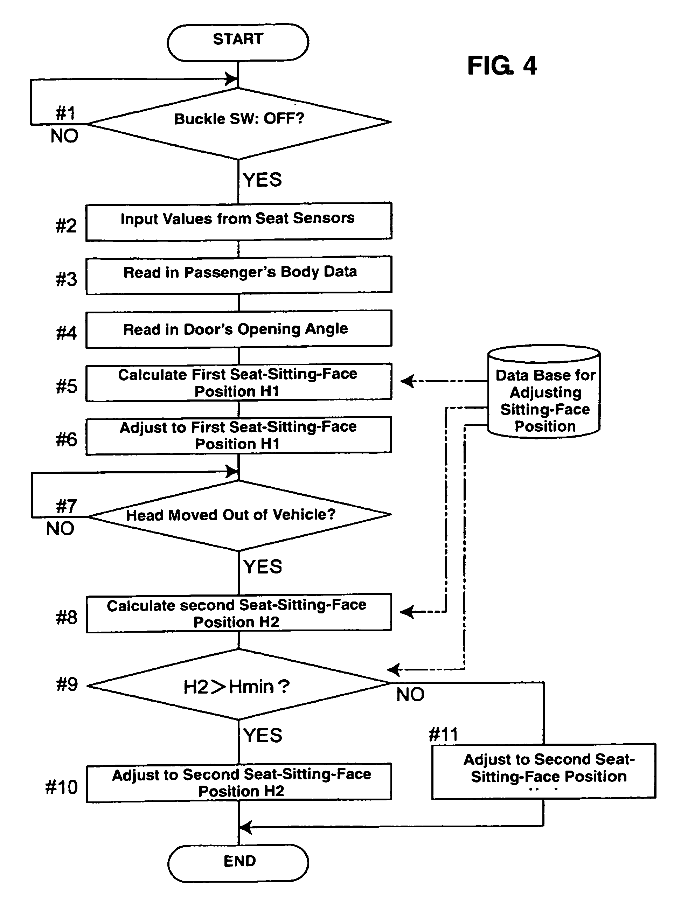

An operation control of the seat **10f, 10r** at the passenger's egress from the vehicle will be described as an example for the rear seat **10r.** FIG. **4** is a flowchart explaining the operation control of the rear seat **10r** at the passenger's egress. After the system starts, in step **#1,** it is determined based on a state of ON/OFF of the buckle SW **22** whether the passenger **Mr** starts the egress move or not. Herein, the present system starts with its initial state in which the passenger **Mr** is seated in the seat **10r** and the seatbelt buckle is locked with the buckle SW **22** on. Accordingly, when the buckle SW **22** is turned off from its ON state (YES: in the step **#1**), it is determined that the passenger **Mr** starts the egress move. Meanwhile, the ON state of the buckle SW **22** is maintained (NO: in the step **#1**), it can be determined that the passenger **Mr** has no intention of the egress.

When it is determined that the passenger **Mr** starts the egress move (YES: in the step **#1**), the detecting value of the seat vertical position sensor **21r**, the data of the passenger's body size, and the opening angle of the door are read in respectively in steps **#2, #3** and **#4.** The data of the passenger's body size and the opening angle of the door are based on the data of the image picked up by the camera **9,** for example.

In the next step #**5**, the first seat-sitting-face position **H1** as the preferable position, i.e. height, orientation and tilt of the seat's sitting face for the egress move of the passenger during the time from the egress start of the vehicle to the completion of the driver's head moving out of the door opening **K** is calculated based on the passenger's body-size data, the roof height **Ht** of the vehicle, and the opening angle of the door and by using the data for adjusting the sitting-face height. Then, in step **#6,** the height **Hs** of the sitting face of the rear seat is adjusted to the first seat-sitting-face position **H1** in accordance with the above-described calculation results.

The first seat-sitting-face position **H1** until the completion of the driver's head moving out of the door opening **K** is calculated based on the length **Tj** of the upper half of the passenger's body which influences the burden to the upper half of the body of the passenger **Mr** as described above. Accordingly, the burden to upper half of the passenger's body for taking the position with the stoop can be reduced properly, ensuring the enough head clearance until the passenger's head moving out of the vehicle.

In the next step **#7,** it is determined based on the image data picked up by the camera **9** whether the passenger's head has moved out of the door opening **K** or not. When the determination result is YES, the second seat-sitting-face position **H2** as the preferable height of the seat's sitting face after the driver's head has moved out of the door opening **K** is calculated in step **#8.** The calculation of the second seat-sitting-face position **H2** is conducted based on the passenger's body-size data, the floor height **Hu** of the vehicle, and the opening angle of the door and by using the data for adjusting the sitting-face height.

Then, it is determined whether the second seat-sitting-face position **H2** calculated in the step **#8** is greater than the above-described minimum height Hmin or not (step **#9**). This minimum height Hmin is the one to ensure the necessary minimum distance Lmin between the hip point **HP** of the rear seat **10r** and the tire house **7** as described above, and the height **Hs** of the sitting face of the rear seat should not be set to be smaller than this minimum height **Hmin** regardless of what the second seat-sitting-face position **H2** calculated in the step **#8** is.

Accordingly, when the determination result in the step **#9** is YES (**H2>Hmin**), the sitting-face height **Hs** of the rear seat **10r** is adjusted to the above-described second sitting-face height **H2** (step **#10**). When the determination result in the step **#9** is NO, the seat-sitting-face minimum height **Hmin** is adjusted to the second sitting-face height **H2** and then the sitting-face height **Hs** of the rear seat **10r** is adjusted to the second sitting-face height **H2** (= **Hmin**) (step **#11**).

Since the above-described second sitting-face height **H2** after the passenger's head moving out of the door opening is determined based on the length **Tk** of the lower half of the passenger's body which influence the burden to the lower half of the body as described above, the muscle burden of the lower half of body of the passenger **Mr** after the passenger's head has moved out of the vehicle. Further, since the second sitting-face height **H2** after the passenger's head moving out of the door opening **K** is greater than the minimum height **Hmin** of the seat's sitting face which is necessary to ensure the necessary minimum distance Lmin between the rear seat **10r** and the tire house **7,** the burden to avoid the interference of the passenger's hip with the tire house at the vehicle egress is reduced effectively.

As described above, according to the present embodiment, the height of the sitting face of the seat is adjusted to the first height **H1** during the time from the start of egress of the passenger to the completion of the driver's head moving out of the door opening **K,** and the height is adjusted to the second height **H2** after the completion of the driver's head moving out of the door opening **K.** Thereby, since the height of the seat sitting face is properly adjusted respectively before and after the driver's head moves out of the door opening during the egress move of the passenger in accordance with the change of the burden to the upper half and the lower half of the passenger, the burden to the passenger at the passenger's egress can be reduced effectively.

Herein, the above-described matters which are explained for the rear seat **10r** are applicable to the front seat **10f** basically except the contents which are influenced by the relationships between the rear tire house **7** and the seat **10r.**

While the seat-sitting-face positions **H1, H2** are obtained by the calculations of a calculation circuit (the height calculating portions **36, 37**) of the seat control unit **30,** these may be obtained by reading out from memory data which are stored in the memory in accordance with the kinds of the passenger's body size.

The present invention should not be limited to the above-described embodiments, and any other modifications and improvements may be applied if within the scope of the present invention, as defined by the appended claims.

## Claims

1. A seat device for a vehicle, comprising:
an egress-start determining device (**22, 31**) to determine a start of egress of a passenger seated in a seat (**10f, 10r**) of the vehicle; a seat-sitting-face position adjusting device (36, 37, 38, 15f, 15r) to adjust a position (Hs) of a sitting face (12f, 12r) of the seat (10f, 10r) upon start of egress of the passenger, **characterised by**
a completion determining device (**9, 34**) to determine completion of a driver's head moving out of a door opening of the vehicle after the start of egress of the passenger; and
the seat-sitting-face position adjusting device (**36, 37, 38, 15f, 15r**) adjusting the position (**Hs**) of the sitting face (**12f, 12r**) of the seat (**10f, 10r**) in such a manner that the position (**Hs**) is adjusted to a first position (**H1)** during a time from the start of egress of the passenger to the completion of the driver's head moving out of the door opening of the vehicle, and/or the position (**Hs**) is adjusted to a second position (**H2**) after the completion of the driver's head moving out of the door opening of the vehicle.

2. The seat device for a vehicle of claim 1, further comprising a body-size detecting device (**9, 33**) to detect a body size of the passenger, wherein said first position (**H1**) is set based on a length of an upper half of a passenger's body which influences a burden to the upper half of the passenger's body and said second position (**H2**) is set based on a length of a lower half of the passenger's body which influences a burden to the lower half of the passenger's body.

3. The seat device for a vehicle of any one or more of the preceding claims, further comprising a door-opening angle detecting device (**9**, **32**) to detect an opening angle of a door, wherein at least one of said first position (**H1**) and second position (**H2**) is corrected by the opening angle of the door which is detected by the door-opening angle detecting device (**9, 32**).

4. The seat device for a vehicle of any one or more of the preceding claims, wherein said seat is a rear seat (**10r**) of the vehicle which is provided beside a rear side door, and at least one of said first position (**H1**) and second position (**H2**) is corrected in correspondence with the opening angle of the rear side door which is detected by the door-opening angle detecting device (**9, 32**) in such a manner that the position corrected becomes lower when the opening angle of the rear side door is relatively small.

5. The seat device for a vehicle of any one or more of the preceding claims, wherein said seat is a rear seat (**10r**) of the vehicle, and said second position (**H2**) is higher than a tire house which is provided substantially beside and/or behind the rear seat.

6. The seat device for a vehicle of any one or more of the preceding claims, wherein said completion determining device (**9, 34**) comprises an image picking-up device (**9**) which is preferably provided at a door mirror of the vehicle.

7. The seat device for a vehicle of any one or more of the preceding claims, wherein said body-size detecting device (**9, 33**) comprises an image picking-up device (**9**) which is preferably provided at a door mirror of the vehicle.

8. The seat device for a vehicle of any one or more of the preceding claims, wherein said second position (**H2**) includes a second height of the seat which is greater than a first height in said first position (**H1**).

9. The seat device for a vehicle of any one or more of the preceding claims, wherein the seat-sitting-face position adjusting device (**36, 37, 38, 15f, 15r**) is configured to adjust at least one of a height, inclination and orientation of a seat cushion (11 f, 11 r) and/or a seat back.

10. A method of controlling a seat device for a vehicle, comprising the steps of:
determining a start of egress of a passenger seated in a seat (**10f, 10r**) of the vehicle by means of an egress-start determining device (**22, 31**);
determining completion of a driver's head moving out of a door opening of the vehicle after the start of egress of the passenger by means of a completion determining device (**9, 34**); and
adjusting a position (**Hs**) of a sitting face (**12f, 12r**) of the seat (**10f, 10r**) by means of a seat-sitting-face position adjusting device (**36, 37, 38, 15f, 15r**) in such a manner that the position (**Hs**) is adjusted to a first position (**H1**) during a time from the start of egress of the passenger to the completion of the driver's head moving out of the door opening of the vehicle, and/or the position (**Hs**) is adjusted to a second position (**H2**) after the completion of the driver's head moving out of the door opening of the vehicle.

11. The method of controlling a seat device for a vehicle of claim 10, further comprising the steps of:
detecting a body size of the passenger by means of a body-size detecting device (**9, 33**),
setting said first position (**H1**) based on a length of an upper half of a passenger's body which influences a burden to the upper half of the passenger's body,and
setting said second position (**H2**) based on a length of a lower half of the passenger's body which influences a burden to the lower half of the passenger's body.

12. The method of controlling a seat device for a vehicle of any one or more of the preceding claims 10 or 11, further comprising the steps of:
detecting an opening angle of a door by means of a door-opening angle detecting device (**9, 32**), and
correcting at least one of said first position (**H1**) and second position (**H2**) in correspondence with the opening angle of the door.

13. The method of controlling a seat device for a vehicle of any one or more of the preceding claims 10 to 12, wherein said seat is a rear seat (**10r**) of the vehicle which is provided beside a rear side door, and at least one of said first position (**H1**) and second position (**H2**) is corrected by the opening angle of the rear side door which is detected by the door-opening angle detecting device (**9, 32**) in such a manner that the position or height corrected becomes lower when the opening angle of the rear side door is relatively small.

14. The method of controlling a seat device for a vehicle of any one or more of the preceding claims 10 to 13, wherein said seat is a rear seat (**10r**) of the vehicle, and said second position or height (**H2**) is set to be higher than a tire house which is provided substantially beside and/or behind the rear seat.

15. Computer program product comprising computer-implemented instructions which, when loaded and executed on a suitable system, can perform the steps of a method of any one or more of the preceding claims 10 to 14, wherein the computer program product is particularly embodied as a computer-readable storage medium, as a signal and/or as a data stream.

## Patentansprüche

1. Sitzvorrichtung für ein Fahrzeug, umfassend:
eine Ausstiegsbeginnbestimmungsvorrichtung (22, 31) zum Bestimmen eines Beginns eines Ausstiegs eines Fahrgasts, der auf einem Sitz (10f, 10r) des Fahrzeugs sitzt;
eine Sitz-Sitzflächenpositionseinstellvorrichtung (36, 37, 38, 15f, 15r) zum Einstellen einer Position (Hs) einer Sitzfläche (12f, 12r) des Sitzes (10f, 10r) bei Beginn des Aussteigens des Fahrgasts, **gekennzeichnet durch**
eine Beendigungsbestimmungsvorrichtung (9, 34) zum Bestimmen einer Beendigung eines Herausbewegens des Kopfs eines Fahrers aus einer Türöffnung des Fahrzeugs nach dem Beginn des Aussteigens des Fahrgasts; und
und **dadurch**, dass die Sitz-Sitzflächenpositionseinstellvorrichtung (36, 37, 38, 15f, 15r) die Position (Hs) der Sitzfläche (12f, 12r) des Sitzes (10f, 10r) auf eine solche Weise einstellt, dass die Position (Hs) auf eine erste Position (H1) während einer Zeit von dem Beginn des Aussteigens des Fahrgasts bis zu der Beendigung des Herausbewegens des Kopfs des Fahrers aus der Türöffnung des Fahrzeugs eingestellt wird, und/oder die Position (Hs) auf eine zweite Position (H2) nach der Beendigung des Herausbewegens des Kopfs des Fahrers aus der Türöffnung des Fahrzeugs eingestellt wird.

2. Sitzvorrichtung für ein Fahrzeug nach Anspruch 1, ferner umfassend eine Körpergrößendetektiervorrichtung (9, 33) zum Detektieren einer Körpergröße des Fahrgasts, wobei die erste Position (H1) basierend auf einer Länge einer oberen Hälfte eines Fahrgastkörpers festgelegt wird, was eine Last auf die obere Hälfte des Fahrgastkörpers beeinflusst, und die zweite Position (H2) basierend auf einer Länge der unteren Hälfte des Fahrgastkörpers festgelegt wird, was eine Last auf die untere Hälfte des Fahrgastkörpers beeinflusst.

3. Sitzvorrichtung für ein Fahrzeug nach einem oder mehreren der vorhergehenden Ansprüche, ferner umfassend eine Türöffnungswinkeldetektiervorrichtung (9, 32) zum Detektieren eines Öffnungswinkels einer Tür, wobei zumindest eine der ersten Position (H1) und der zweiten Position (H2) durch bzw. um den Öffnungswinkel der Tür korrigiert wird, der von der Türöffnungswinkeldetektiervorrichtung (9, 32) detektiert wird.

4. Sitzvorrichtung für ein Fahrzeug nach einem oder mehreren der vorhergehenden Ansprüche, wobei der Sitz ein Rücksitz (10r) des Fahrzeugs ist, der neben einer hinteren Seitentür vorgesehen ist, und zumindest eine der ersten Position (H1) und der zweiten Position (H2) in Entsprechung mit dem Öffnungswinkel der hinteren Seitentür korrigiert wird, der von der Türöffnungswinkeldetektiervorrichtung (9, 32) detektiert wird, und zwar auf eine solche Weise, dass die korrigierte Position niedriger wird, wenn der Öffnungswinkel der hinteren Seitentür relativ schmal ist.

5. Sitzvorrichtung für ein Fahrzeug nach einem oder mehreren der vorhergehenden Ansprüche, wobei der Sitz ein Rücksitz (10r) des Fahrzeugs ist und die zweite Position (H2) höher ist als ein Radhaus bzw. -kasten, das bzw. der im Wesentlichen neben und/oder hinter dem Rücksitz vorgesehen ist.

6. Sitzvorrichtung für ein Fahrzeug nach einem oder mehreren der vorhergehenden Ansprüche, wobei die Beendigungsbestimmungsvorrichtung (9, 34) eine Bildaufnahmevorrichtung (9) umfasst, die vorzugsweise an einem Türspiegel des Fahrzeugs vorgesehen ist.

7. Sitzvorrichtung für ein Fahrzeug nach einem oder mehreren der vorhergehenden Ansprüche, wobei die Körpergrößendetektiervorrichtung (9, 33) eine Bildaufnahmevorrichtung (9) umfasst, die vorzugsweise an einem Türspiegel des Fahrzeugs vorgesehen ist.

8. Sitzvorrichtung für ein Fahrzeug nach einem oder mehreren der vorhergehenden Ansprüche, wobei die zweite Position (H2) eine zweite Höhe des Sitzes enthält, die größer ist als eine erste Höhe in der ersten Position (H1).

9. Sitzvorrichtung für ein Fahrzeug nach einem oder mehreren der vorhergehenden Ansprüche, wobei die Sitz-Sitzflächenpositionseinstellvorrichtung (36, 37, 38, 15f, 15r) konfiguriert ist, zumindest eines von Höhe, Neigung und Ausrichtung eines Sitzkissens bzw. -polsters (11 f, 11 r) und/oder einer Sitzlehne einzustellen.

10. Verfahren zum Steuern bzw. Regeln einer Sitzvorrichtung für ein Fahrzeug, umfassend die Schritte:
Bestimmen eines Beginns eines Ausstiegs eines Fahrgasts, der auf einem Sitz (10f, 10r) des Fahrzeugs sitzt, mittels einer Ausstiegsbeginnbestimmungsvorrichtung (22, 31);
Bestimmen einer Beendigung eines Herausbewegens des Kopfs eines Fahrers aus einer Türöffnung des Fahrzeugs nach dem Beginn des Aussteigens des Fahrgasts mittels einer Beendigungsbestimmungsvorrichtung (9, 34); und
Einstellen einer Position (Hs) einer Sitzfläche (12f, 12r) des Sitzes (10f, 10r) mittels einer Sitz-Sitzflächenpositionseinstellvorrichtung (36, 37, 38, 15f, 15r) auf eine solche Weise, dass die Position (Hs) auf eine erste Position (H1) während einer Zeit von dem Beginn des Aussteigens des Fahrgasts bis zu der Beendigung des Herausbewegens des Kopfs des Fahrers aus der Türöffnung des Fahrzeugs eingestellt wird, und/oder die Position (Hs) auf eine zweite Position (H2) nach der Beendigung des Herausbewegens des Kopfs des Fahrers aus der Türöffnung des Fahrzeugs eingestellt wird.

11. Verfahren zum Steuern bzw. Regeln einer Sitzvorrichtung für ein Fahrzeug nach Anspruch 10, ferner umfassend die Schritte:
Detektieren einer Körpergröße des Fahrgasts mittels einer Körpergrößendetektiervorrichtung (9, 33),
Festlegen der ersten Position (H1) basierend auf einer Länge einer oberen Hälfte eines Fahrgastkörpers, was eine Last auf die obere Hälfte des Fahrgastkörpers beeinflusst, und
Festlegen der zweiten Position (H2) basierend auf einer Länge der unteren Hälfte des Fahrgastkörpers, was eine Last auf die untere Hälfte des Fahrgastkörpers beeinflusst.

12. Verfahren zum Steuern bzw. Regeln einer Sitzvorrichtung für ein Fahrzeug nach einem oder mehreren der vorhergehenden Ansprüche 10 oder 11, ferner umfassend die Schritte:
Detektieren eines Öffnungswinkels einer Tür mittels einer Türöffnungswinkeldetektiervorrichtung (9, 32), und
Korrigieren zumindest einer der ersten Position (H1) und der zweiten Position (H2) in Entsprechung mit dem Öffnungswinkel der Tür.

13. Verfahren zum Steuern bzw. Regeln einer Sitzvorrichtung für ein Fahrzeug nach einem oder mehreren der vorhergehenden Ansprüche 10 bis 12, wobei der Sitz ein Rücksitz (10r) des Fahrzeugs ist, der neben einer hinteren Seitentür vorgesehen ist, und zumindest eine der ersten Position (H1) und der zweiten Position (H2) durch bzw. um den Öffnungswinkel der hinteren Seitentür korrigiert wird, der von der Türöffnungswinkeldetektiervorrichtung (9, 32) detektiert wird, und zwar auf eine solche Weise, dass die korrigierte Position oder Höhe niedriger wird, wenn der Öffnungswinkel der hinteren Seitentür relativ schmal ist.

14. Verfahren zum Steuern bzw. Regeln einer Sitzvorrichtung für ein Fahrzeug nach einem oder mehreren der vorhergehenden Ansprüche 10 bis 13, wobei der Sitz ein Rücksitz (10r) des Fahrzeugs ist und die zweite Position oder Höhe (H2) höher ist als ein Radhaus bzw. -kasten, das bzw. der im Wesentlichen neben und/oder hinter dem Rücksitz vorgesehen ist.

15. Computerprogrammprodukt, umfassend computerimplementierte Instruktionen, die, wenn auf einem geeigneten System geladen und ausgeführt, die Schritte eines Verfahrens nach einem oder mehreren der vorhergehenden Ansprüche 10 bis 14 durchführen können, wobei das Computerprogrammprodukt insbesondere als ein computerlesbares Speichermedium, als ein Signal und/oder als ein Datenstrom ausgeführt ist.

## Revendications

1. Dispositif de siège pour un véhicule comprenant :
un dispositif de détermination de début de sortie (22, 31) pour déterminer un début de sortie d'un passager assis dans un siège (10f, 10r) du véhicule ;
un dispositif de réglage de position de face assise de siège (36, 37, 38, 15f, 15r) pour régler une position (Hs) d'une face assise (12f, 12r) du siège (10f, 10r) lors du début de sortie du passager, **caractérisé par**
un dispositif de détermination de fin (9, 34) pour déterminer la fin de la tête d'un conducteur sortant d'une ouverture de portière du véhicule après le début de sortie du passager ; et
le dispositif de réglage de position de face assise de siège (36, 37, 38, 15f, 15r) réglant la position (Hs) de la face assise (12f, 12r) du siège (10f, 10r) de telle sorte que la position (Hs) est réglée sur une première position (H1) au cours d'une période du début de sortie du passager à la fin de la tête du conducteur sortant de l'ouverture de portière du véhicule, et/ou la position (Hs) est réglée sur une seconde position (H2) après la fin de la tête du conducteur sortant de l'ouverture de portière du véhicule.

2. Dispositif de siège pour un véhicule selon la revendication 1, comprenant en outre un dispositif de détection de taille corporelle (9, 33) pour détecter une taille corporelle du passager, dans lequel ladite première position (H1) est définie en fonction d'une longueur d'une moitié supérieure du corps d'un passager qui influence une charge sur la moitié supérieure du corps du passager et ladite seconde position (H2) est définie en fonction d'une longueur d'une moitié inférieure du corps du passager qui influence une charge sur la moitié inférieure du corps du passager.

3. Dispositif de siège pour un véhicule selon l'une quelconque ou plusieurs des revendications précédentes, comprenant en outre un dispositif de détection d'angle d'ouverture de portière (9, 32) pour détecter un angle d'ouverture d'une portière, dans lequel au moins une desdites première position (H1) et seconde position (H2) est corrigée par l'angle d'ouverture de la portière qui est détecté par le dispositif de détection d'angle d'ouverture de portière (9, 32).

4. Dispositif de siège pour un véhicule selon l'une quelconque ou plusieurs des revendications précédentes, dans lequel ledit siège est un siège arrière (10r) du véhicule qui est prévu à côté d'une portière latérale arrière, et au moins une desdites première position (H1) et seconde position (H2) est corrigée en correspondance avec l'angle d'ouverture de la portière latérale arrière qui est détecté par le dispositif de détection d'angle d'ouverture de portière (9, 32) de telle sorte que la position corrigée devient inférieure lorsque l'angle d'ouverture de la portière latérale arrière est relativement petit.

5. Dispositif de siège pour un véhicule selon l'une quelconque ou plusieurs des revendications précédentes, dans lequel ledit siège est un siège arrière (10r) du véhicule et ladite seconde position (H2) est plus haute qu'un passage de roue qui est prévu essentiellement à côté de et/ou derrière le siège arrière.

6. Dispositif de siège pour un véhicule selon l'une quelconque ou plusieurs des revendications précédentes, dans lequel ledit dispositif de détermination de fin (9, 34) comprend un dispositif de capture d'image (9) qui est de préférence prévu au niveau d'un rétroviseur de portière du véhicule.

7. Dispositif de siège pour un véhicule selon l'une quelconque ou plusieurs des revendications précédentes, dans lequel ledit dispositif de détection de taille corporelle (9, 33) comprend un dispositif de capture d'image (9) qui est de préférence prévu au niveau d'un rétroviseur de portière du véhicule.

8. Dispositif de siège pour un véhicule selon l'une quelconque ou plusieurs des revendications précédentes, dans lequel ladite seconde position (H2) inclut une seconde hauteur du siège qui est supérieure à une première hauteur dans ladite première position (H1).

9. Dispositif de siège pour un véhicule selon l'une quelconque ou plusieurs des revendications précédentes, dans lequel le dispositif de réglage de position de face assise de siège (36, 37, 38, 15f, 15r) est configuré pour régler au moins un élément parmi une hauteur, inclinaison et orientation d'un coussin de siège (11f, 11r) et/ou d'un dossier de siège.

10. Procédé de commande d'un dispositif de siège pour un véhicule, comprenant les étapes consistant à :
déterminer un début de sortie d'un passager assis dans un siège (10f, 10r) du véhicule au moyen d'un dispositif de détermination de début de sortie (22, 31) ;
déterminer la fin de la tête d'un conducteur sortant d'une ouverture de portière du véhicule après le début de sortie du passager au moyen d'un dispositif de détermination de fin (9, 34) ; et
régler une position (Hs) d'une face assise (12f, 12r) du siège (10f, 10r) au moyen d'un dispositif de réglage de position de face assise de siège (36, 37, 38, 15f, 15r) de telle sorte que la position (Hs) est réglée sur une première position (H1) au cours d'une période du début de sortie du passager à la fin de la tête du conducteur sortant de l'ouverture de portière du véhicule, et/ou la position (Hs) est réglée sur une seconde position (H2) après la fin de la tête du conducteur sortant de l'ouverture de portière du véhicule.

11. Procédé de commande d'un dispositif de siège pour un véhicule selon la revendication 10, comprenant en outre les étapes consistant à :
détecter une taille corporelle du passager au moyen d'un dispositif de détection de taille corporelle (9, 33),
définir ladite première position (H1) en fonction d'une longueur d'une moitié supérieure du corps d'un passager qui influence une charge sur la moitié supérieure du corps du passager, et
définir ladite seconde position (H2) en fonction d'une longueur d'une moitié inférieure du corps du passager qui influence une charge sur la moitié inférieure du corps du passager.

12. Procédé de commande d'un dispositif de siège pour un véhicule selon l'une quelconque ou plusieurs des revendications précédentes 10 ou 11, comprenant en outre les étapes consistant à :
détecter un angle d'ouverture d'une portière au moyen d'un dispositif de détection d'angle d'ouverture de portière (9, 32) et
corriger au moins une desdites première position (H1) et seconde position (H2) en correspondance avec l'angle d'ouverture de la portière.

13. Procédé de commande d'un dispositif de siège pour un véhicule selon l'une quelconque ou plusieurs des revendications précédentes 10 à 12, dans lequel ledit siège est un siège arrière (10r) du véhicule qui est prévu à côté d'une portière latérale arrière, et au moins une desdites première position (H1) et seconde position (H2) est corrigée par l'angle d'ouverture de la portière latérale arrière qui est détecté par le dispositif de détection d'angle d'ouverture de portière (9, 32) de telle sorte que la position ou hauteur corrigée devient inférieure lorsque l'angle d'ouverture de la portière latérale arrière est relativement petit.

14. Procédé de commande d'un dispositif de siège pour un véhicule selon l'une quelconque ou plusieurs des revendications précédentes 10 à 13, dans lequel ledit siège est un siège arrière (10r) du véhicule et ladite seconde position ou hauteur (H2) est définie comme étant plus haute qu'un passage de roue qui est prévu essentiellement à côté de et/ou derrière le siège arrière.

15. Produit de programme informatique comprenant des instructions mises en oeuvre par ordinateur qui, lors de leur chargement et exécution sur un système approprié, peuvent réaliser les étapes d'un procédé selon l'une quelconque ou plusieurs des revendications précédentes 10 à 14, dans lequel le produit de programme informatique est notamment mis en oeuvre en tant que support de stockage lisible par ordinateur, en tant que signal et/ou en tant que flux de données.
